# FASCICULE DE BREVET EUROPEEN

(11) **EP 2 144 769 B1**
(45) Date de publication et mention de la délivrance du brevet: **21.12.2011**
(21) Numéro de dépôt: 08805773.2
(22) Date de dépôt: 14.05.2008
(51) Int. Cl.: B60D 1/60

(54) **ELEMENT D'HABILLAGE D'UN BOUCLIER DE VEHICULE AUTOMOBILE**
VERKLEIDUNGSELEMENT FÜR EINEN MOTORFAHRZEUGSTOSSDÄMPFER
MOTOR VEHICLE BUMPER TRIM ELEMENT

(30) Priorité: 14.05.2007 FR 0703455
(43) Date de publication de la demande: 20.01.2010
(73) Titulaire: Renault SAS, 92100 Boulogne Billancourt (FR)
(72) Inventeur: KHAZAAL, Julien, F-78310 Maurepas (FR); POURRIAS, Jean-Yves, F-92160 Antony (FR); SIMON, Marc, F-93130 Noisy Les Sec (FR)
(86) Numéro de dépôt international: PCT/FR2008/050825
(87) Numéro de publication internationale: WO 2008/149014

(56) Documents cités:
- EP-A- 0 885 776
- EP-A- 1 112 870
- EP-A- 1 125 773
- FR-A- 2 845 061

## Description

L'invention concerne l'agencement d'un élément d'habillage d'un bouclier de pare-chocs de véhicule automobile. Elle concerne aussi un bouclier adapté à la réception d'un tel élément d'habillage, un pare-chocs équipé d'un tel élément d'habillage et un véhicule automobile en tant que tel comprenant un tel élément d'habillage. Elle est particulièrement adaptée à une décoration d'un véhicule au niveau de l'emplacement prévu pour le positionnement d'un anneau de remorquage. Enfin, l'invention porte aussi sur un procédé de montage et démontage d'un tel élément d'habillage:

Aujourd'hui, les boucliers de pare-chocs de véhicule automobile, tels que décrits dans le document EP1112870, présentent souvent une trappe qui permet, dans sa position ouverte, l'accès au moyen de fixation d'un anneau de remorquage en cas de besoin. L'avantage d'une telle solution de l'art antérieur est sa facilité d'utilisation. Toutefois, cela se fait au détriment de l'esthétique globale du véhicule dont la partie frontale est discontinue et ne peut pas présenter un habillage très poussé à cause de cette contrainte mécanique imposée par la présence d'une trappe.

L'objet de la présente invention consiste donc à proposer une solution d'habillage pour notamment les boucliers de véhicules automobiles.

La solution repose sur un agencement d'un élément d'habillage sur un support permettant l'accès à une zone localisée en arrière de l'élément d'habillage, caractérisé en qu'une face arrière de l'élément d'habillage comporte des premiers moyens de maintien constitués par une série de clips inférieurs et supérieurs destinés à coopérer avec des clips correspondants du support et en ce que l'agencement comporte en outre un second moyen de maintien, de l'élément d'habillage, de manière que le retrait de l'élément d'habillage s'effectue selon au moins deux déplacements successifs selon au moins deux directions parmi la direction transversale, verticale, et longitudinale.

Selon une implémentation de l'invention, les moyens de maintien sont tels que le retrait de l'élément d'habillage s'effectue selon un premier mouvement vertical de bas en haut pour dégager les clips, puis par un deuxième mouvement transversal pour dégager le deuxième moyen de maintien, puis par un troisième mouvement longitudinal vers l'avant du véhicule pour extraire l'élément d'habillage.

Selon une autre variante, les moyens de maintien sont tels que le retrait de l'élément d'habillage s'effectue selon un premier mouvement d'échappement du moyen de verrouillage à l'aide d'un outil inséré par une ouverture aménagée au sein du support, puis par un deuxième mouvement transversal pour dégager le deuxième moyen de maintien, puis par un troisième mouvement longitudinal vers l'avant du véhicule pour extraire l'élément d'habillage.

Les clips du premier moyen de maintien de l'élément d'habillage peuvent présenter une forme en U inversé vers le bas et peuvent coopérer avec des orifices du support présentant une partie large et une partie étroite, afin de maintenir l'élément d'habillage dans les directions verticales et longitudinales.

Le second moyen de maintien peut se présenter sous la forme d'une patte élastique portée par le support coopérant avec un ergot de l'élément d'habillage afin de maintenir l'élément d'habillage dans la direction transversale.

Selon une variante de réalisation, l'élément d'habillage amovible est de plus lié au support par des languettes imperdables.

L'élément d'habillage peut être monté sur un bouclier ou sur une grille montée sur un bouclier.

Cet agencement d'un élément d'habillage sur un support peut représenter un élément de décoration dissimulant au moins partiellement un accès à un anneau de remorquage.

Enfin, l'invention porte aussi sur un véhicule automobile comprenant un agencement d'un élément d'habillage sur un support tel que décrit précédemment.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente une vue d'une partie d'un bouclier avant de véhicule automobile comprenant un habillage selon un mode d'exécution de l'invention ;
la figure 2 représente une vue de face d'un élément d'habillage hors de son logement sur le bouclier avant de véhicule automobile ;
les figures 3 à 6 représentent des vues agrandies de différentes étapes du procédé de montage de l'élément d'habillage selon le mode d'exécution de l'invention ;
la figure 7 représente une vue arrière de la partie extrême de la liaison entre l'élément d'habillage et le bouclier selon le mode d'exécution de l'invention ;
la figure 8 représente une vue arrière du bouclier seul ;
les figures 9 à 11 représentent différentes étapes du procédé de montage de l'élément d'habillage selon le mode d'exécution de l'invention ;
la figure 12 représente la vue de la partie du bouclier avant de véhicule automobile après démontage de l'élément d'habillage.

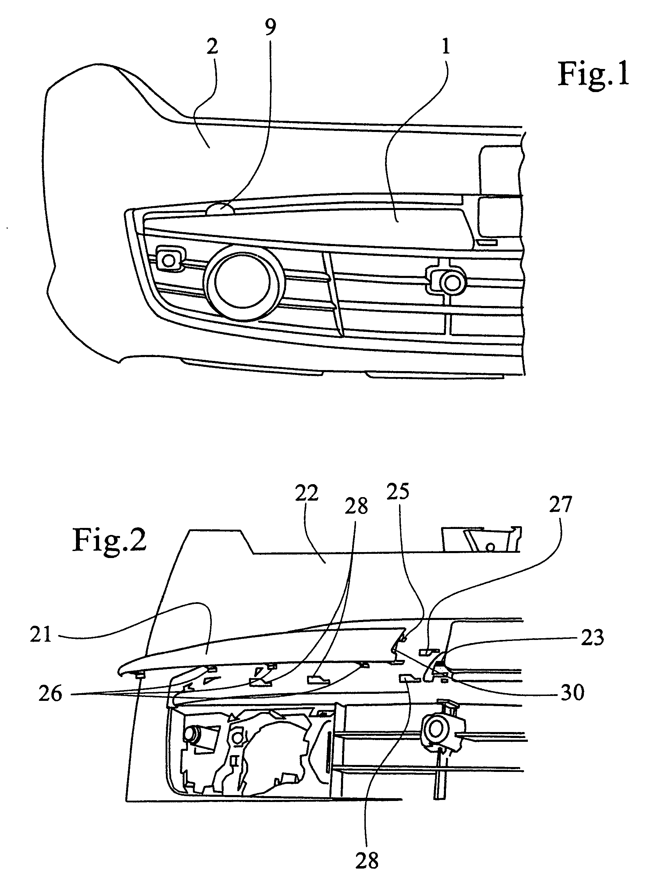

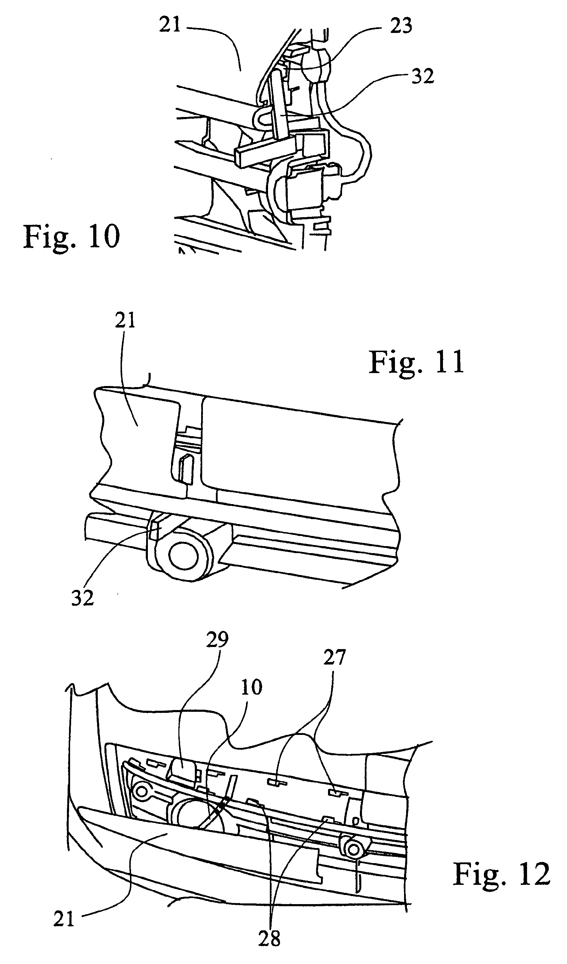

Selon le mode d'exécution représenté sur la figure 1, un élément d'habillage amovible 1 peut occuper une première position montée sur le bouclier 2 ou sur une grille du bouclier 2 d'un pare-chocs de véhicule automobile, dans laquelle il recouvre au moins partiellement le dispositif d'accès au moyen d'accrochage 9 d'un anneau de remorquage, et une seconde position démontée, telle que représentée sur les figures 2 ou 12, qui permet l'accès au dispositif de remorquage.

Pour des raisons de simplification de la description suivante, nous utiliserons les termes « avant » et « arrière » pour désigner des éléments dans le sens longitudinal avant-arrière d'un véhicule automobile sur lesquels ils sont normalement positionnés. Nous utiliserons les termes « inférieurs » et « supérieurs » pour désigner des éléments selon un axe vertical perpendiculaire à l'axe longitudinal du véhicule automobile, et « droite » et « gauche » pour désigner des directions selon un axe latéral ou transversal perpendiculaire à l'axe longitudinal au véhicule automobile selon une vue de face de l'avant du véhicule automobile.

Dans le mode d'exécution représenté, l'élément d'habillage 1 est un jonc chromé de forme allongée et légèrement courbée, sensiblement triangulaire, monté de manière amovible sur le bouclier 2 avant d'un véhicule automobile à l'aide d'une série de clips positionnés sur sa face arrière.

Ainsi, les figures 2 à 12 représentent un mode d'exécution de l'invention dans lequel un élément d'habillage 21 présente des éléments d'accrochage 25, 26 pour sa fixation sur un bouclier 22.

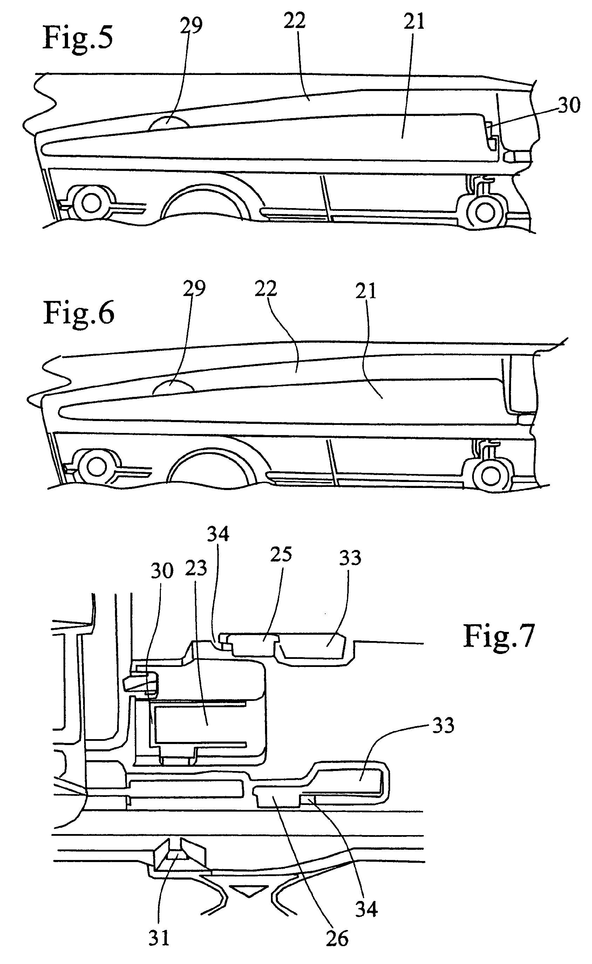

L'élément d'habillage 21 selon ce mode d'exécution comprend un premier moyen de maintien se présentant par une première série de clips 25 dans la partie supérieure de sa face arrière et une seconde série de clips 26 dans la partie inférieure de sa face arrière, prévus pour coopérer avec respectivement des premiers orifices 27 aménagés dans la partie haute du bouclier et des seconds orifices 28 aménagés dans sa partie basse. Comme cela est plus particulièrement visible sur la figure 7 par exemple, chaque orifice de liaison 27, 28 du bouclier 22 présente une forme avec une partie gauche 33 large et une partie droite 34 plus étroite.

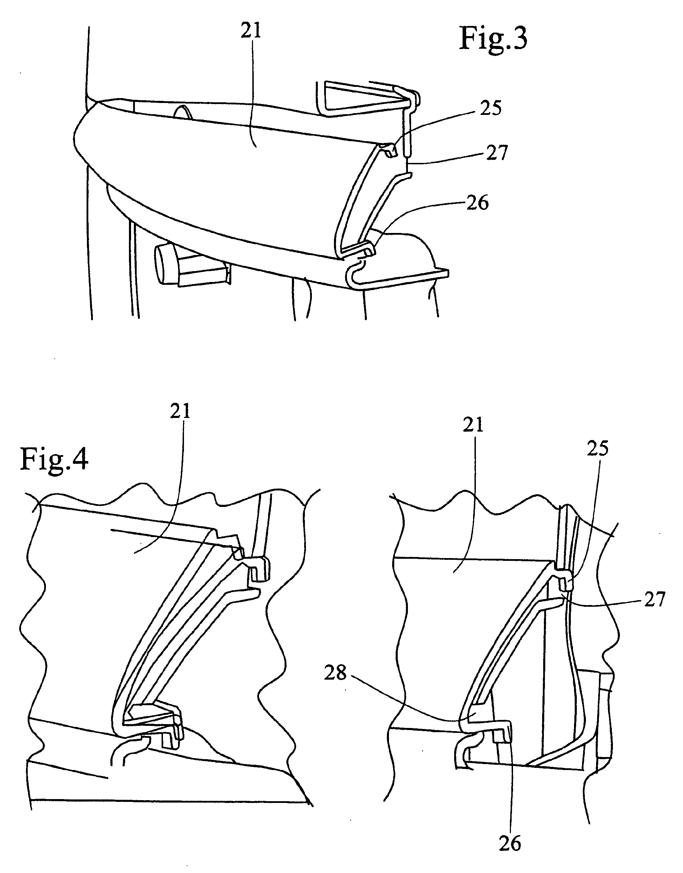

Le procédé de montage du bouclier, illustré sur les figures 3 à 6, comprend une première étape consistant à insérer les clips inférieurs 26 dans la partie gauche large 33 des orifices 28 correspondant du bouclier, puis à pivoter l'élément d'habillage vers le haut autour de cette liaison inférieure jusqu'à positionner les clips supérieurs 25 dans les orifices correspondant 27, au niveau de même de leur partie large 33. Ce premier positionnement permet une liaison provisoire de l'élément d'habillage dans une position intermédiaire grâce à ses propriétés élastiques. La figure 5 illustre le résultat de cette première étape du montage de l'élément d'habillage 21.

Une seconde étape du procédé de montage consiste en une étape de verrouillage du bouclier 21, obtenue par son déplacement vers la droite, afin de positionner un second moyen de maintien qui est un moyen de verrouillage positionné vers l'extrémité droite de l'élément d'habillage 21. Le résultat de cette dernière étape est illustré sur la figure 6, dans laquelle l'élément d'habillage 21 masque partiellement un obturateur ou trappe permettant l'accès à un dispositif d'accrochage 29 d'un anneau de remorquage.

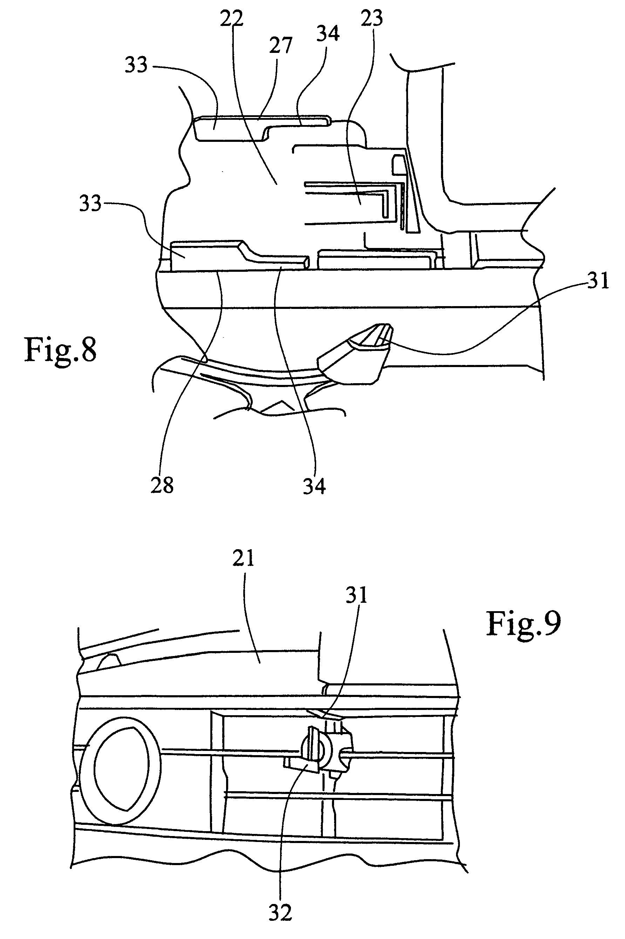

La figure 7 illustre en vue arrière l'extrémité droite de la liaison obtenue entre l'élément d'habillage 21 et le bouclier 22. Les clips de maintien 25, 26 ont une forme en U inversé qui chevauche la cloison inférieure des orifices 27, 28 étroits 34 du bouclier de sorte d'obtenir un maintien du bouclier dans les directions longitudinales et verticales. D'autre part, le moyen de verrouillage est formé par une patte élastique transversale 23 portée par le bouclier 22 et apte à coopérer avec un ergot 30 porté par l'élément d'habillage 21, empêchant tout déplacement latéral vers la gauche de l'élément d'habillage 21, qui est ainsi maintenu dans les trois directions. La figure 8 illustre en vue de face cette partie extrême du bouclier 22 en l'absence de l'élément d'habillage pour permettre de visualiser clairement sa structure.

Selon une variante de réalisation intéressante, l'élément d'habillage 21 est de plus lié au bouclier 22 par des languettes imperdables 10 qui garantissent sa liaison permanente avec le bouclier 22, même dans son état démonté, afin d'empêcher sa perte, comme cela est visible sur la figure 2.

Le procédé de démontage du bouclier est obtenu par les étapes inversées du procédé de montage décrit précédemment. Pour faciliter le déverrouillage de l'élément d'habillage 21, une ouverture 31 est prévue dans la partie inférieure du bouclier 22, qui permet l'insertion d'un outil 32 en forme d'équerre ou un simple tournevis, comme illustré sur les figures 9 à 11, qui permet d'agir sur la patte de verrouillage 23 du bouclier 22 afin de libérer l'ergot 30, avant de provoquer un déplacement latéral vers la gauche de l'élément d'habillage, de sorte d'amener les clips 25, 26 dans les parties larges 33 des orifices 27, 28. A partir de cette position, ces clips peuvent échapper à ces orifices et l'élément d'habillage 21 peut être retiré par son déplacement dans la direction longitudinale, comme illustré sur la figure 12.

La solution propose un procédé de montage et de démontage très simple grâce à des séries de clips de formes particulières, qui permettent le découpage du mouvement en au moins deux étapes consistant en un déplacement successif de l'élément d'habillage selon au moins deux directions différentes parmi les trois directions longitudinale, latérale ou verticale, pour finalement obtenir la liaison ou la libération de l'élément d'habillage.

La solution proposée présente donc les avantages suivants :
- elle permet d'atteindre une esthétique améliorée d'un bouclier de véhicule automobile, par la suppression d'une trappe qui était apparente dans l'art antérieur pour l'accès au dispositif de remorquage ;
- le mécanisme de montage/démontage de l'élément d'habillage est simple et permet toujours une mise en oeuvre conviviale de la fonction de remorquage ;
- le mécanisme de montage/démontage de l'élément d'habillage est conçu pour éviter toute détérioration lors des opérations de son montage et démontage, qui sont réalisées par des manipulations simples et avec un outillage restreint ;
- cette esthétique peut être réalisée de manière économique et flexible car différents habillages peuvent être envisagés sur un même bouclier, permettant de réaliser à moindre coût des séries de véhicules automobiles avec des aspects esthétiques différents.

L'agencement d'un élément d'habillage décrit précédemment a été utilisé très avantageusement pour le bouclier d'un véhicule automobile en combinaison avec le dispositif de remorquage du véhicule, mais il pourrait aussi être exploité pour l'habillage d'autres zones du véhicule, par une liaison identique sur tout autre support. D'autres modes de réalisation sont envisageables, obtenus par exemple en combinant les deux modes d'exécution décrits.

## Revendications

1. Agencement d'un élément d'habillage (1 ; 21) d'un bouclier (2; 22) de pare-chocs de véhicule automobile permettant l'accés à une zone localisée en arrière de l'elément d'habillage, caractérisé en qu'une face arrière de l'élément d'habillage comporte des premiers moyens de maintien constitués par une série de clips inférieurs (26) et supérieurs (25) destinés à coopérer avec des orifices (28, 27) correspondants du bouclier (2 ; 22) et en ce que l'agencement comporte en outre un second moyen de maintien (23, 30) de l'élèment d'habillage (1 : 21), de manière que le retrait de l'élément d'habillage s'effectue selon au moins deux déplacements successifs selon au moins deux directions parmi la direction transversale, verticale, et longitudinale.

2. agencement d'un élément d'habillage (1) selon la revendication 1, **caractérisé en ce que** les moyens de maintien sont tels que le retrait de l'élément d'habillage (1) s'effectue selon un premier mouvement vertical de bas en haut pour dégager les clips, puis par un deuxième mouvement transversal pour dégager le deuxième moyen de maintien, puis par un troisième mouvement longitudinal vers l'avant du véhicule pour extraire l'élément d'habillage.

3. Agencement d'un élément d'habillage (21) selon la revendication 1, **caractérisé en ce que** les moyens de maintien (25, 26, 30, 27, 28, 23) sont tels que le retrait de l'élément d'habillage (21) s'effectue selon un premier mouvement d'échappement du second moyen de maintien (23, 30) à l'aide d'un outil (32) inséré par une ouverture (31) aménagée au sein du bouclier (22), puis par un deuxième mouvement transversal pour dégager le premier moyen de maintien (25, 26), puis par un troisième mouvement longitudinal vers l'avant du véhicule pour extraire l'élément d'habillage (21).

4. Agencement d'un élément d'habillage (21) selon l'une des revendications 1 à 3, **caractérise en ce que** les clips (25, 26) du premier moyen de maintien, de l'élément d'habillage (21) présentent une forme en U inversé vers le bas et **en ce qu'**ils coopèrent avec des orifices (27, 28). du bouclier (22) présentant une partie large (33) et une partie étroite (34), afin de maintenir l'élément d'habillage (21) dans les directions verticales et longitudinales.

5. Agencement d'un élément d'habillage (21) selon l'une des revendications 1 à 4, **caractérisé en ce que** le second moyen de maintien se présente sous la forme d'une patte élastique (23) portée par le bouclier (22) coopérant avec un ergot (30) de l'élément d'habillage (21) afin de maintenir l'élément d'habillage (21) dans la direction transversale.

6. Agencement d'un élément d'habillage (1 ; 21) selon l'une des revendications précédentes, **caractérisé en ce que** l'élèment d'habillage (1 ; 21) amovible est de plus lié au bouclier (2 ; 22) par des languettes imperdables (10).

7. Agencement d'un élément d'habillage (1 ; 21 selon l'une des revendications précédentes, **caractérisé en ce que** l'élément d'habillage (1 ; 21) est un élément de décoration dissimulant au moins partiellement: un accès à un anneau de remorquage.

8. Véhicule automobile comprenant un agencement d'un élément d'habillage (1 ; 21) d'un bouclier (2 22) de pare-chocs selon une des revendications précédentes.

## Claims

1. Arrangement of a trim element (1; 21) of a motor vehicle bumper apron (2; 22) enabling access to a localized area behind the trim element, **characterized in that** a rear face of the trim element comprises first holding means consisting of a series of lower clips (26) and upper clips (25) intended to engage with corresponding orifices (28, 27) on the apron (2; 22) and **in that** the arrangement further comprises a second holding means (23, 30) for the trim element (1; 21) such that the trim element is detached by at least two successive movements in at least two directions selected from the transverse, vertical and longitudinal directions.

2. arrangement of a trim element (1) according to Claim 1, **characterized in that** the holding means are designed such that the trim element (1) is detached by a first, vertical movement upward in order to release the clips, followed by a second, transverse movement to release the second holding means and then by a third, longitudinal movement toward the front of the vehicle to take off the trim element.

3. Arrangement of a trim element (21) according to Claim 1, **characterized in that** the holding means (25, 26, 30, 27, 28, 23) are designed such that the trim element (21) is detached by a first, escaping movement of the second holding means (23, 30) using a tool (32) inserted through an opening (31) made within the apron (22), followed by a second, transverse movement to release the first holding means (25, 26) and then by a third, longitudinal movement coward the front of the vehicle to take off the trim element (21).

4. Arrangement of a trim element (21) according to one of Claims 1 to 3, **characterized in that** the clips (25, 26) of the first holding means for the trim element (21) are in the form of an upside-down U and **in that** they engage with orifices (27, 28) in the apron (22) having a wide part (33) and a narrow part (34) in order to hold the trim element (21) in the vertical and longitudinal directions.

5. Arrangement of a trim element (21) according to one of Claims 1 to 4, **characterized in that** the second holding means is in the form of a resilient tab (23) on the apron (22) engaging with a lug (30) the trim element (21) in order to hold the trim element (21) in the transverse direction.

6. Arrangement of a trim element (1; 21) according to one of the preceding claims, **characterized in that** the detachable trim element (1; 21) is also connected to the apron (2; 22) by captive tongues (10).

7. Arrangement of a trim element (1; 21) according to one of the preceding claims, **characterized in that** the trim element (1; 21) is a decorative element that at least partially conceals access to a tow ring.

8. Motor vehicle comprising an arrangement of a trim element (1; 21) of a bumper apron (2; 22) according to one of the preceding claims.

## Patentansprüche

1. Anordnung eines Verkleidungselements (1; 21) für eine Stoßfängerschürze (2; 22) eines Kraftfahrzeugs, das Zugang zu einem lokalisierten Bereich hinter dem Verkleidungselement gestattet, **dadurch gekennzeichnet, dass** eine Rückseite des Verkleidungselements erste Haltemittel aufweist, die durch eine Reihe von unteren (26) und oberen (25) Klammern gebildet werden, welche mit Öffnungen (28, 27) zusammenwirken sollen, die der Schürze (2; 22) entsprechen, und dass die Anordnung des Weiteren ein zweites Haltemittel (23, 30) für das Verkleidungselement (1; 21) aufweist, so dass das Abnehmen des Verkleidungselements gemäß mindestens zwei aufeinander folgenden Bewegungen entlang mindestens zwei Richtungen unter der Quer-, Vertikal- und Längsrichtung erfolgt.

2. Anordnung eines Verkleidungselements (1) nach Anspruch 1, **dadurch gekennzeichnet, dass** die Haltemittel derart sind, dass das Abnehmen des Verkleidungselements (1) gemäß einer ersten, vertikalen Bewegung von unten nach oben zum Ausrücken der Klammern, dann durch eine zweite Bewegung in Querrichtung zum Ausrücken des zweiten Haltemittels, dann durch eine dritte Bewegung in Längsrichtung zum vorderen Ende des Fahrzeugs zum Abziehen des Verkleidungselements erfolgt.

3. Anordnung eines Verkleidungselements (21) nach Anspruch 1, **dadurch gekennzeichnet, dass** die Haltemittel (25, 26, 30, 27, 28, 23) derart sind, dass das Abnehmen des Verkleidungselements (21) gemäß einer ersten Bewegung zum Entfernen des zweiten Haltemittels (23, 30) mit Hilfe eines durch einen in der Schürze (22) ausgebildeten Durchlass (31) eingesteckten Werkzeugs (32), dann durch eine zweite Bewegung in Querrichtung zum Ausrücken des ersten Haltemittels (25, 26), dann durch eine dritte Bewegung in Längsrichtung zum vorderen Ende des Fahrzeugs zum Abziehen des Verkleidungselements (21) erfolgt.

4. Anordnung eines Verkleidungselements (21) nach einem der Ansprüche 1 bis 3, **dadurch gekennzeichnet, dass** die Klammern (25, 26) des ersten Haltemittels des Verkleidungselements (21) die Form eines auf dem Kopf stehenden U aufweisen und dass sie mit Öffnungen (27, 28) der Schürze (22) zusammenwirken, die einen breiten Teil (33) und einen schmalen Teil (34) aufweisen, um das Verkleidungselement (21) in Vertikal- und in Längsrichtung festzuhalten.

5. Anordnung eines Verkleidungselements (21) nach einem der Ansprüche 1 bis 4, **dadurch gekennzeichnet, dass** das zweite Haltemittel in Form einer elastischen Nase (23) vorliegt, die an der Schürze (22) vorgesehen ist und mit einem Zapfen (30) des Verkleidungselements (21) zusammenwirkt, um das Verkleidungselement (21) in Querrichtung festzuhalten.

6. Anordnung eines Verkleidungselements (1; 21) nach einem der vorhergehenden Ansprüche, **dadurch gekennzeichnet, dass** das lösbare Verkleidungselement (1; 21) weiterhin durch unverlierbare Zungen (10) mit der Schürze (2; 22) verbunden ist.

7. Anordnung eines Verkleidungselements (1; 21) nach einem der vorhergehenden Ansprüche, **dadurch gekennzeichnet, dass** das Verkleidungselement (1; 21) ein Zierelement ist, das zumindest teilweise Zugang zu einer Abschleppöse verdeckt.

8. Kraftfahrzeug mit einer Anordnung eines Verkleidungselements (1; 21) für eine Stoßfängerschürze (2; 22) nach einem der vorhergehenden Ansprüche.
